# EUROPÄISCHE PATENTSCHRIFT

(11) **EP 1 908 803 B1**
(45) Veröffentlichungstag und Bekanntmachung des Hinweises auf die Patenterteilung: **01.01.2014**
(21) Anmeldenummer: 07117623.4
(22) Anmeldetag: 01.10.2007
(51) Int. Cl.: C09C 1/42

(54) **Verfahren zur Herstellung einer Kaolin enthaltenden Beschichtungszusammensetzung, deren Verwendung und Beschichtungszusammensetzung**
Method for manufacturing a coating composition containing kaolin, its use and coating formula
Procédé destiné à la fabrication d'une composition de revêtement contenant du kaolin, son utilisation et composition de revêtement

(30) Priorität: 02.10.2006 DE 102006047043
(43) Veröffentlichungstag der Anmeldung: 09.04.2008
(73) Patentinhaber: Dormineral GmbH & Co. KG, 92242 Hirschau (DE)
(72) Erfinder: Kräuter, Reinhard, 92237 Sulzbach-Rosenberg (DE)
(74) Vertreter: Hannke, Christian

(56) Entgegenhaltungen:
- WO-A1-02/16510
- WO-A2-2006/081333

## Beschreibung

Die Erfindung betrifft ein Verfahren zur Herstellung einer Beschichtungszusammensetzung enthaltend Kaolin, deren Verwendung sowie eine Beschichtungszusammensetzung enthaltend Kaolin, welches in einer Kugelmühle vermahlen ist und in Form grobflächiger, dünner, plättchenartiger Partikel mit einer mittleren spezifischen Oberfläche von 7,5-20 m²/g, gemessen nach BET, vorliegt.

Oberflächenbeschichtungen wie z.B. Fassaden-, Wand-, Innen- oder Aussendisperionsfarben, Lacke oder Putze sind Beschichtungszusammensetzungen enthaltend Bindemittel, Lösemittel, Farbmittel bzw. Pigmente, Füllstoffe und Additive. Sie werden Industriell in großen Mengen für dekorative oder funktionelle Zwecke eingesetzt.

Bei Wand- und Fassadenfarben sind optische Eigenschaften wie beispielsweise Weißgrad und Gelbwert von großer Bedeutung, da diese Farben sehr häufig als dekorative Oberflächenbeschichtung eingesetzt werden. Weiterhin ist auch die Abdeckung der Oberflächen von Bedeutung, da ein Farbanstrich den Untergrund möglichst vollständig abdecken soll, um Farbabweichungen zu reduzieren und eine homogene Farbe zu erzeugen.

Ein Putz ist ein Belag aus Bindemitteln und Zuschlagstoffen, der an Außen- und Innenwänden sowie Decken aufgebracht wird. Als mineralischer Zuschlagstoff wird üblicherweise Sand verwendet. Je nach Einsatzart-erfallt der Putz verschiedene Zwecke, z.B. Herstellung eines glatten Untergrundes zum Fliesen, Streichen oder Tapezieren, Wärmedämmung und Wasserabweisung.

In vielen Oberflächenbeschichtungen werden anorganische Rohstoffe wie beispielsweise Kaolinprodukte als Füllstoff oder Additiv eingesetzt. So werden wässrige Kaoline als Füllstoff eingesetzt um z.B. Harz einzusparen. Kalzinierte Kaoline werden als Weißpigment bzw. TiO₂-Extender zur Verbesserung der Weiße oder Opazität einer Beschichtung verwendet.

Weitere wichtige Eigenschaften des Beschichtungsmaterials sind z.B. seine Rheologie, Elastizität oder mechanische Stabilität. Zur Verbesserung dieser Eigenschaften können auch mineralische Rohstoffe eingesetzt werden. So werden zur Verbesserung der mechanischen Stabilität der Beschichtung, insbesondere zur Vermeidung von Rissbildung, Fasern oder Glimmerpartikel eingesetzt.

Asbest wurde in der Vergangenheit als verstärkende Faser in Farben verwendet. Die Fasern verstärken den Farbfilm und absorbieren innere Spannungen, wodurch Farben mit besseren mechanischen Werten und besserer Dauerhaftigkeit entwickelt werden konnten. Wegen seiner Karzinogenität ist Asbest als Baumaterial nunmehr verboten und durch verschiedene organische und anorganische Fasern ersetzt worden. Beispiele sind Glas-, Aramid- und Acrylfasem, die in Epoxydharzen und polyesterbasierte Beschichtungen verwendet werden. Weiterhin werden in Asphalt und Emulsionsfarben Cellulosefasern verwendet. Oftmals sind diese Fasern aber nur schwer in die Farbe einzuarbeiten und können aufgrund einer zu geringen Feinheit nicht aufgespritzt werden.

Neuere Produkte auf Basis von Mineralfasern von sehr sauberem Gestein mit fest definierter chemischer Zusammensetzung sind bereitgestellt worden. Variable Faserlängen und Ölabsorptionswerte sind notwendig für ein optimales Ergebnis.

Auch Glimmerpartikel werden zur Verbesserung der mechanischen Stabilität verschiedener Oberflächenbeschichtungen eingesetzt. Bei der Glimmergruppe bzw. Glimmer handelt es sich um komplexe Aluminium-Kalium-Magnesium-Schichtsilikate mit wechselnden Gehalten an Kalium, Magnesium, Eisen usw. Je nach Eisengehalt erscheinen sie farblos, lichtgrün, rot, braun oder schwarz-braun. Der Glimmer wird üblicherweise nasschemisch aufbereitet, klassiert, gemahlen und mikronisiert und in einer Konzentration bis etwa 10% einer Farbe zugemischt.

Allerdings weisen nur wenige Glimmertypen lagerstättenbedingt einen hohen Weißgrad auf. Diese Glimmertypen, z.B. Muskovitglimmer, sind zudem relativ teuer. So werden für den Farbenbereich Glimmertypen mit einem Weißgrad R457 nach ISO 2470 von 66 bis 77, Helligkeltswert L* (gemessen nach CIELab) von 89 bis 93, angeboten. Diese Werte sind für handelsüblichen Glimmer zwar relativ hoch, für den Einsatz in Farben aber nachteilig. Diese relativ niedrigen Weißewerte müssen oftmals durch erhöhten Einsatz von z.B. sehr teurem TiO₂ kompensiert werden.

Eine weitere Möglichkeit, die Rissbeständigkeit von Oberflächenbeschichtungen zu verbessern, besteht in der Verwendung von speziellen Additiven oder Bindemitteln. So wird in der Druckschrift EP 0 217 380 die Herstellung von wässrigen Copolymersystemen, die zu einer besseren Filmstabilität beitragen, beschrieben. Die Herstellung durch Emulsionspolymerisation von Acryl- bzw. Methacrylsäuren, ethylenisch ungesättigten Monomeren bestehend aus Carbonsäuren, Vinylchlorid und Vlnylester und Ethylen, ist aber relativ aufwendig und beschränkt den Farbenhersteller in der Auswahl des Bindemittels. Weiterhin sind diese spezifischen chemischen Lösungen des Problems relativ teuer.

WO 02/16610 offenbart Farbzusammensetzungen bei denen die Rissebildung bei der Trocknung reduziert ist Die Farbzusammensetzung enthält eine Kaolinsuspension deren Kaolin eine besonders geringe Partikelgröße mit d₅₀-Werten von etwa 1 µm bis maximal 5 µm aufweist und sich durch eine große Ölaufnahmefähigkeit auszeichnet. Die damit erreichbaren Ergebnisse in Bezug auf die Rissüberbrückung erfüllen jedoch nicht aktuelle Anforderungen.

Es ist daher Aufgabe der vorliegenden Erfindung, eine möglichst kostengünstige Alternative zur Verwendung von Glimmer oder spezieller Additive bzw. Bindemitteln in Farbe, Papier, Kunststoff und/oder Effektpigmenten zur Verfügung zu stellen, welche zudem Risse in der Oberflächenbeschichtung verhindert und zugleich zu verbesserten optischen Werten beiträgt.

Diese Aufgabe wird durch ein Verfahren zur Herstellung einer Beschichtungszusammensetzung enthaltend Kaolin, deren Verwendung sowie Beschichtungszusammensetzung enthaltend Kaolin gelöst.

Kerngedanke der Erfindung ist ein Verfahren zur Herstellung einer Beschichtungszusarnmensetzung enthaltend Kaolin, bei dem in einem ersten Schritt ein Kaolin mit einem mittleren Partikeldurchmesser von mindestens 2 µm gemessen mittels einem Sedigraph und einer mittleren Korngröße von mindestens 7,5 µm gemessen mittels Laserbeugung, in Wasser dispergiert wird und in einem zweiten Schritt in einer Kugelmühle vermahlen wird, bis das Kaolin in Form grobflächiger, dünner, plättchenartiger Partikel mit einem mittleren Durchmesser von 1-40 µm, gemessen mittels einem Sedigraph und einer mittleren Korngröße von mindestens 5 µm gemessen mittels Laserbeugung, einer mittleren spezifische Oberfläche von 7,5 - 20 m²/g, gemessen nach BET, einem Weißgrad R457 von mindestens 75 und einer Ölaufnahme kleiner 28 g/100g vorliegt und dieses anschließend gepresst, getrocknet, pulverisiert und einer Beschichtungszusammensetzung zugesetzt wird.. Die Kugelmühle dient dabei der Feinstzerkleinerung und Homagenisierung. Sie besteht aus einem in Rotation versetzten Mahlbecher, in den das zu zerkleinernde Kaolin mit den Mahlkugeln gefüllt wird.

Durch den Mahlvorgang, dessen Parameter variabel sind, werden durch das Zusammenspiel starker Reib- und Prallkräfte die Silikatschichten des Kaolins gegeneinander verschoben und zerdrückt so dass dünne, flächige Plättchen entstehen.

Eine derart hergestellte Beschichtungszusammensetzung zeichnet sich insbesondere dadurch aus, dass das Kaolin in Form grobflächiger, dünner, plättchenartiger Partikel mit einem mittleren Durchmesser von 1 - 40 µm, bevorzugt 1,5 - 3 µm, gemessen mittels einem Sedigraph und mit einer mittleren spezifischen Oberfläche von 7,5 - 20 m²/g, bevorzugt 10-15 m²/g, gemessen nach BET, vorliegt.

Vorzugsweise weist die Beschichtungszusammensetzung ein Kaolin mit einem Weißgrad R 457 von mindestens 75, bevorzugt von mindestens 80, bevorzugt von mindestens 85, auf.

Weiterhin bevorzugt weist das Kaolin in der Beschichtungszusammensetzung einen Gelbwert von maximal 7, bevorzugt von maximal 4, sowie eine Ölaufnahme kleiner 28 g/100 g, bevorzugt 26 g/100 g, auf.

Insbesondere wird die Kaolin enthaltende Beschichtungszusammensetzung zur Beschichtung von Oberflächen, als Füllstoff und/oder Pigment in Farbe, Lack, Papier und/oder Kunststoff verwendet.

Dabei wird erfindungsgemäß ein spezielles grobflächiges dünnes Kaolin in der Oberflächenbeschichtung etngesetzt. Dieses Material weist eine gute Verärbeitbarkeit in der Farbe auf und hat einen wesentlich höheren Weißgrad als die herkömmlichen nass vermahlenden Glimmerpartikel. Weiterhin führt die Kaolin enthaltende Beschichtungszusammensetzung zu einer verbesserten Rissüberbrückung in der Farbe und ist günstiger als Glimmer.

Die plättchenförmigen Kaolinpartikel richten sich in der Farbe aus und bewirken eine Armierung der Farbe, wodurch Risse optimal überbrückt werden können. Denkbare Anwendungen liegen im Bereich qualitativ hochwertiger Farben.

Kaolin wird bereits häufig in Farben eingesetzt. Vor allem werden kalzinierte Kaoline in hochwertigen Farben zur Verbesserung oder Einstellung der optischen oder rheologischen Eigenschaften eingesetzt. Geschlämmte, wenig veredelte Kaoline werden in relativ niedrigqualitativen Farben eingesetzt. Die derzeit erhältlichen Kaoline bieten aber keine ausreichende Rissüberbrückung.

Das erfindungsgemäße Verfahren dient der Herstellung spezieller grobteiliger, dünner Kaolinplättchen. Diese können überall dort eingesetzt werden, wo eine große Partikelfläche und eine geringe Dicke gewünscht ist, beispielsweise als Füllstoff und/oder Pigment in Farbe, Lack, Papier und/oder Kunststoff.

Eine weitere Einsatzmöglichkeit in der Verwendung liegt z.B. im Korrosionsschutz, wo die Kaolin enthaltende Beschichtungszusammensetzung in Korrosionsschutzlacke eingearbeitet wird. In Klebstoffen kann die Haftung auf dem Untergrund verbessert werden. In Papier eingebracht, führen diese Produkte zu einer verbesserten Abdeckung, so dass die gleiche Papierqualität bereits mit erheblich weniger Kaolin hergestellt werden kann. Dadurch kann der Anteil anderer Komponenten wie zB. das günstige GCC (gemahlenes natürliches Calzium-carbonat) erhöht werden, was zu besseren optischen Eigenschaften führt. In Kunststoffen können die Barrierewirkung und die mechanische Stabilität verbessert werden. Weiterhin können die erfindungsgemäßen Kaolinplättchen als Basismaterial für Effektpigmente verwendet werden.

Hierin wird mit "Weißgrad" oder "Weiße" immer die Weiße R457 nach ISO 2470 angegeben, auch die genannten Gelbwerte werden nach ISO 2470 bestimmt. Für die Bestimmung und den Vergleich der Korngrößenverteilung werden Messergebnisse nach zwei Verfahren angegeben: Sedigraph und Laserbeugung (Cilas). Die Unterschiedlichkeit der Resultate ergibt sich aus methodischen Unterschieden der Verfahren sowie der plättchenförmigen Morphologie der Partikel, welche die Herleitung eines durchschnittlichen Partikeldurchmessers bzw. einer Partikelgrößenverteilung, idealerweise kugelförmiger Partikel, erschwert.

Im erfindungsgemäßen Verfahren werden grobkörnige Kaoline mit einer mittleren Korngröße von mindestens 2 µm, gemessen mit einem Sedigraphen, in Wasser dispergiert und in einer Kugelmühle unter variablen Bedingungen vermahlen. Bevorzugt werden Ausgangskaoline mit einer mittleren Korngröße von mindestens 5 µm oder mindestens 10 µm verwendet, gemessen mit einem Sedigraph.

Mittels Laserbeugung betragen die mittleren Korngrößen des Ausgangskaolins mindestens 7,5 µm, vorzugsweise mindestens 10 µm. Die besten Ergebnisse werden mit Ausgangskaolin mit einem mittleren Korndurchmesser von mindestens 20 µm, vorzugsweise mindestens 25 µm erreicht, gemessen nach der Laserbeugungsmethode (Cilas).

Anschließend wird das Material abgepresst, getrocknet und pulverisiert. Die Endprodukte weisen einen mittleren Durchmesser von mindestens 1 µm, vorzugsweise 1,5 µm auf, gemessen mit einem Sedigraph. Wird das beste Ausgangsmaterial verwendet, sind mittlere Korndurchmesser nach Sedigraph von über 2µm, vorzugsweise über 2,6 µm, eher bevorzugt 3 µm möglich.

Die mittleren Korndurchmesser nach dem Laserbeugungsverfahren betragen mindestens 5 µm, bevorzugt mindestens 7 µm. Mit dem besten Ausgangsmaterial sind mittlere Korndurchmesser nach Laserbeugung (Cilas) von mindestens 10 µm, bevorzugt mindestens 12,5 µm, eher bevorzugt mindestens 14 µm oder sogar über 15 µm möglich. Der maximale mittlere Komdurchmesser beträgt 40 µm nach beiden Messmethoden.

Der Weißgrad (R457) beträgt mindestens 75, besonders vorteilhaft weist das Material einen Weißgrad von mindestens 80, bevorzugt mindestens 83 oder 85 auf.

Der Gelbwert nach ISO 2470 des Kaolins beträgt maximal 7, bevorzugt maximal 5, eher bevorzugt maximal 4. Der b*-Wert, gemessen nach CIE-L*a*b*, beträgt maximal 5, bevorzugt maximal 4, eher bevorzugt maximal 3.

Die spezifische Oberfläche des Kaolins, gemessen mittels BET-Verfahren, liegt zwischen 7,5 m²/gund 20 m²/g. Mit dem erfindungsgemäßen Verfahren kann aber auch Material hergestellt werden, welches eine spezifische Oberfläche von mindestens 10 m²/g, mindestens 12,5 m²/g oder 15 m²/g. aufweist.

Nur hochwertiger, teurer Glimmer weist einen Weißgrad zwischen 75 und 80 auf, die meisten handelsüblichen Glimmertypen haben Weißgrade von 40 bis 70. In der nachfolgenden Tabelle 1 werden mittlerer Durchmesser, optische Werte und spezifische Oberfläche von verschiedenen am Markt verfügbaren, herkömmlichen Glimmertypen 1-5 aufgelistet:

**Tabelle 1:**

| | **1** | **2** | **3** | **4** | **5** |
|---|---|---|---|---|---|
| d50 [µm] | **4,5** | **5** | **43** | **72** | **60** |
| Weiße | **77** | **75** | **68** | **66** | **43** |
| L* | **93** | **92** | **89** | **89** | **75** |
| a* | **0** | **0,5** | **0** | **0,5** | **1,5** |
| b* | **5** | **4,4** | **5** | **5,5** | **7,5** |
| Ölaufnahme (ISO 787/5) [g/100g] | **77** | **83** | **72** | **70** | **75** |
| Spez. Oberfläche (BET) [m²/g] | **7,5** | **6,5** | **4** | **3** | **2,5** |

Der Tabelle 1 ist zu entnehmen, dass die optischen Eigenschaften der erfindungsgemäßen Beschichtungszusammensetzung im Vergleich zu den herkömmlichen Glimmerprodukten deutlich günstiger sind. Die spezifische Oberfläche ist höher und die Korngrößenverteilung gröber.

### Beispiel 1

In einem ersten vergleichenden Test werden ein erfindungsgemäßer Kaolin V1 und ein herkömmlicher Glimmer V2 (Glimmer GHL 325 SU) in einer Fassadenfarbe auf Rissbildung getestet.

Der erfindungsgemäße Kaolin V1 weist folgende Komgroßenverteilung auf:

**Tabelle 2:**

| | **Sedigraph** | **Cilas** |
|---|---|---|
| µm | **Ma-%** | **Ma-%** |
| >40 | 0 | 0 |
| 30-40 | 0 | 1 |
| 20-30 | 0 | 12 |
| 10-20 | 1 | 43 |
| 4-10 | 18 | 30 |
| 2-4 | 27 | 7 |
| 1-2 | 23 | 5 |
| < 1 | 31 | 3 |
| d₂₉ | 0,8 | 6,1 |
| d₅₀ | 1,9 | 11,0 |
| d₇₅ | 3,4 | 16,1 |

Mit beiden Materialien wird eine Dispergierlösung hergestellt. Anschließend wird eine Pigment/Füllstoff Paste hergestellt, die durch Zugabe von Bindemittel und Additiven zu einer Fassadenfarbe verarbeitet wird.

Die Rezeptur dieser Farbe wird in der nachfolgenden Tabelle 3 zusammengefasst

**Tabelle 3:**

| | Muster 1 Standard | Muster 2 Erfindung | Muster 3 Erfindung |
|---|---|---|---|
| Wasser | 212,5 | 212,5 | 212,5 |
| Dispergiermittel | 3 | 3 | 3 |
| Biozid | 2 | 2 | 2 |
| Verdickungsmittel | 4 | 4 | 4 |
| Dispergiermittel | 1,5 | 1,5 | 1,5 |
| Entschäumer | 2 | 2 | 2 |
| TiO₂ | 180 | 180 | 180 |
| Talkum | 65 | 65 | 60 |
| Talkum | 50 | 50 | 45 |
| CaCO₃ | 75 | 75 | 70 |
| CaCO₃ | 75 | 75 | 70 |
| Erfindung: Kaolin V1 | 0 | 20 | 40 |
| Standard: Glimmer V2 | 20 | 0 | 0 |
| NaOH | 3 | 3 | 3 |
| Bindemittel | 280 | 280 | 280 |
| Verdickungsmittel | 2 | 2 | 2 |
| Filmbildungshilfsmittel | 20 | 20 | 20 |
| Verdickungsmittel | 5 | 5 | 5 |
| | | | |
| Summe | 1000 | 1000 | 1000 |

Zur Beurteilung der Rissbildung wird die Dispersionsfarbe mittels einer Rakel mit einem keilförmigen Spalt bis 2000 µm Nassschichtdicke auf eine Glasplatte aufgezogen. Die so beschichteten Platten werden 24 bis 48 Stunden im Normklima getrocknet. Die Stelle, an der die Rissbildung beginnt, wird gekennzeichnet (Grenzlinie) und auf dieser Linie die Trockenschichtdicke bestimmt.

Industrielle Normwerte legen Grenzen fest, die als Minimumwerte für die Rissbeständigkeit gelten. Für Fassaden-Dispersionsfarben werden Farben mit einem Grenzwert von 900 µm akzeptiert, für Emulsionsfarben liegt die Grenze bei 400 µm.

**Tabelle 4:**

| Versuch | Rissbildung bei Trockenschicht [µm] |
|---|---|
| Muster 1 (Standard) | > 900 |
| Muster 2 (Erfindung) | > 900 |
| Muster 3 (Erfindung) | > 900 |

Tabelle 4 kann entnommen werden, dass bei Einsatz des erfindungsgemäßen Kaolins V1 (Muster 2) die Anforderungen für Fassadenfarben hinsichtlich Rissüberbrückung erreicht werden. Auch bei Muster 3 mit erhöhter Menge an dem erfindungsgemäßen Kaolin V1 und gleichzeitiger Reduzierung der Anteile an Talkum und Calciumcarbonat bleibt im Vergleich zur Standardrezeptur die Rissneigung gering.

### Beispiel 2

In einer Versuchsreihe zum erfindungsgemäßen Verfahren werden 2 Kaolintypen unterschiedlicher Korngröße behandelt. Die Ausgangsmaterialien weisen gemäß Tabelle 5 einen d 50-Wert, gemessen mit einem Sedigraphen, von 4,9 bzw. 13,8 µm auf. Das Aufgabematerial V1 hat einen Anteil von 24 Ma-% der Körner mit einem äquivalenten sphärischen Korndurchmesser kleiner als 2 µm. Beim Aufgabematerial V2 sind nur 5% der Körner kleiner als 2 µm.

**Tabelle 5:**

| | **Sedigraph** | | **Cilas** | |
|---|---|---|---|---|
| | **V1 Aufgabe** | **V2 Aufgabe** | **V1 Aufgabe** | **V2 Aufgabe** |
| µm | **Ma-%** | **Ma-%** | **Ma-%** | **Ma-%** |
| >56 | 0 | 0 | 1,2 | 7,3 |
| 50-56 | 0 | 0 | 0,8 | 4,9 |
| 45-50 | 0 | 0 | 0,7 | 5,6 |
| 40-45 | 0 | 0,9 | 0,8 | 7,3 |
| 36-40 | 0,1 | 1,5 | 0,9 | 6,8 |
| 30-40 | 0,1 | 2,8 | 2,5 | 11,7 |
| 25-30 | 1,1 | 6 | 4,1 | 10.9 |
| 20-25 | 1,9 | 10,9 | 7,4 | 11,6 |
| 15-20 | 4,7 | 20,7 | 13,5 | 11,1 |
| 10-15 | 12,9 | 30,2 | 20,9 | 9,4 |
| 8-10 | 9,5 | 9,4 | 9,3 | 3,1 |
| 6-8 | 12,8 | 5,7 | 9,1 | 2,8 |
| 5-6 | 7,4 | 2 | 5 | 1,4 |
| 4-5 | 7,9 | 1,9 | 5,3 | 1,4 |
| 3-4 | 9,2 | 1,8 | 4,9 | 1,3 |
| 2-3 | 9,4 | 1,4 | 4,2 | 1,1 |
| 1-2 | 10,5 | 2,1 | 6 | 1,2 |
| 0,6-1 | 5,8 | 2,7 | 2,1 | 0,6 |
| 0,5-0,6 | 2,1 | 0 | 0,3 | 0,1 |
| 0,4-0,5 | 2,1 | 0 | 0,2 | 0,1 |
| 0,3-0,4 | 2,5 | 0 | 0,2 | 0,1 |
| 0,2-0,3 | 0 | 0 | 0,3 | 0,1 |
| 0-0,2 | 0 | 0 | 0,3 | 0,1 |

Zusammengefasst können diese Ausgangsmatedallen durch folgende Kennzahlencharakterisiert werden:

**Tabelle 6:**

| | **Sedigraph** | | **Cilas** | |
|---|---|---|---|---|
| | **V1 Aufgabe** | **V2 Aufgabe** | **V1 Aufgabe** | **V2 Aufgabe** |
| µm | **Ma-%** | **Ma-%** | **Ma-%** | **Ma-%** |
| >40 | 0 | 1 | 4 | 25 |
| 30-40 | 0 | 4 | 3 | 19 |
| 20-30 | 3 | 17 | 12 | 23 |
| 10-20 | 18 | 51 | 34 | 21 |
| 4-10 | 38 | 19 | 29 | 9 |
| 2-4 | 19 | 3 | 9 | 2 |
| 1-2 | 11 | 2 | 6 | 1 |
| < 1 | 13 | 3 | 3 | 1 |
| d₂₅ | 2,2 | 9,6 | 6,3 | 16,0 |
| d₅₀ | 4,9 | 13,8 | 10,6 | 27,0 |
| d₇₅ | 8,4 | 19,1 | 17,0 | 40,0 |

Diese Materialien werden in Wasser dispergiert. Der resultierende Slurry mit einem Feststoffgehalt von 24,1% entsprechend 284 g/l wird anschließend in einer Nasskugelmühle mit Zirkonoxidkugeln verarbeitet. Der Füllgrad beträgt 75% und die Durchsatzleistung 1440 l/h.

Nach der Behandlung in der Kugelmühle wird das Material in einer Filterpresse entwässert und anschließend getrocknet. Nach der Trocknung erfolgen die Pulverisierung und eine Schutzsiebung.

Die Kornverteilung der resultierenden Materialien V1 und V2 ist in der nachfolgenden Tabelle 7 zusammengestellt:

**Tabelle 7:**

| | **Sedigraph** | | **Cilas** | |
|---|---|---|---|---|
| | **V1** | **V2** | **V1** | **V2** |
| µm | **Ma-%** | **Ma-%** | **Ma-%** | **Ma-%** |
| >40 | 0 | 0 | 4 | 0 |
| 30-40 | 0 | 0 | 3 | 0 |
| 20-30 | 0 | 0 | 12 | 4 |
| 10-20 | 0 | 2 | 34 | 31 |
| 4-10 | 11 | 18 | 29 | 37 |
| 2-4 | 23 | 29 | 9 | 13 |
| 1-2 | 24 | 32 | 6 | 9 |
| < 1 | 41 | 19 | 3 | 5 |
| d₂₅ | 0,6 | 1,2 | 3,6 | 7,0 |
| d₅₀ | 1,3 | 2,0 | 7,3 | 12,0 |
| d₇₅ | 2,6 | 3,6 | 12,3 | 17,5 |

Der d₅₀-Wert der Probe V1, gemessen mit dem Sedigraphen, hat sich durch das erfindungsgemäße Verfahren von 4,9 auf 1,3 µm verringert, entsprechend einer Reduzierung um 74%. Zugleich hat sich der d₅₀-Wert gemessen nach Cilas von 10,6 auf 7,3 µm geändert, entsprechend einer Reduzierung um 31%. Die Ursache der Differenz liegt in der unterschiedlichen Methodik begründet.

Bei der Probe V2 gab es eine Verringerung des d₅₀-Wertes, gemessen mit dem Sedigraph von 13,8 µm auf 2 µm, gemessen nach Cilas von 27 µm auf 12 µm.

Das Material V1 hat, nach Sedigraph gemessen, ein Anteil von 65% < 2 µm, beim Material V2 haben 51% der Körner einen Durchmesser kleiner als 2 µm.

Weitere Eigenschaften der beiden erfindungsgemäßen Beschichtungszusammensetzungen V1 und V2 werden in der nachfolgenden Tabelle 8 zusammengefasst:

**Tabelle 8**

| | Muster 1 | Muster 2 |
|---|---|---|
| CIE L* | 94,73 | 92,32 |
| CIE a* | -0,17 | -0,24 |
| CIE b* | 3,54 | 2,08 |
| Weiße 457 nm | 82,67 | 79,00 |
| Gelbwert | 6,61 | 3,88 |
| BET | 12,5 | 8,1 |
| Dichte | 2,6 | 2,6 |
| Olaufnahme | 26 | 28 |

Tabelle β ist zu entnehmen, dass die Materialien Muster 1 und Muster 2 im Vergleich zu den herkömmlich verwendeten Glimmertypen eine wesentlich niedrigere Ölaufnahme aufweisen. Herkömmliche Glimmer nehmen bis zum dreifachen mehr Öl auf und verbrauchen damit in der Farbe mehr Bindemittel. Da Bindemittel eine der teuersten Komponenten der Farbe sind, ist die niedrigere Ölaufnahme der erfindungsgemäßen Zusammensetzung ein weiterer wichtiger Vorteil gegenüber Glimmer.

### Beispiel 3

Mit der erfindungsgemäßen Beschichtungszusammensetzung V2 sowie den Vergleichsmateriallen Glimmer 325 und einem herkömmlichen plättchenförmigen Kaolin werden Farben hergestellt. Die Rezepturen sind in der nachfolgenden Tabelle 9 zusammengefasst.

**Tabelle 9**

| Funktion | Muster 1 | Muster 2 | Muster 3 | Muster 4 | Muster 5 |
|---|---|---|---|---|---|
| Wasser | 255,0 | 266,0 | 255,0 | 255,0 | 255,0 |
| Entschäumer | 3,0 | 3,0 | 3,0 | 3,0 | 3,0 |
| Biozid | 1,5 | 1,5 | 1,5 | 1,5 | 1,5 |
| Verdlckungsmittel | 4,0 | 4,0 | 4,0 | 4,0 | 4,0 |
| Dispergiermittel | 3,5 | 3,5 | 3,5 | 3,5 | 3,5 |
| Dispergiermittel | 1,0 | 1,0 | 1,0 | 1,0 | 1,0 |
| TiO2 | 150,0 | 150,0 | 150,0 | 150,0 | 150,0 |
| CaCO₃ | 115,0 | 110,0 | 110,0 | 110,0 | 110,0 |
| CaCO₃ | 120,0 | 110,0 | 110,0 | 120,0 | 110,0 |
| Kaolin, kalziniert | 100,0 | 75,0 | 75,0 | 75,0 | 75,0 |
| Diatomit | 35,0 | 35,0 | 35,0 | 35,0 | 35,0 |
| Bindemittel | 210,0 | 210,0 | 210,0 | 210,0 | 210,0 |
| Filmbildner | 2,5 | 5,0 | 5,0 | 5,0 | 5,0 |
| Kaolin V2 (Erfindung) | - | - | 40,0 | 15,0 | - |
| Glimmer (Standard) | - | 40,0 | - | 15,0 | - |
| Standardkaolin (Standard) | - | - | - | - | 40,0 |
| Summe | 1.000,5 | 1.003,0 | 1.003,0 | 1.003,0 | 1.003,0 |

Rissbildung tritt während der Trocknung der Farbe ein. Um die Rissbildung zu analysieren, werden die Testfarben Muster 1 bis Muster 5 auf einem Trägermaterial aus Pappe keilförmig aufgestrichen. Die Filmdicke variiert von 50 µm zu 2 mm. Nach vollständiger Trocknung treten Risse auf. Anschließend wird die maximale Filmdicke bestimmt, bei der noch keine Risse auftreten.

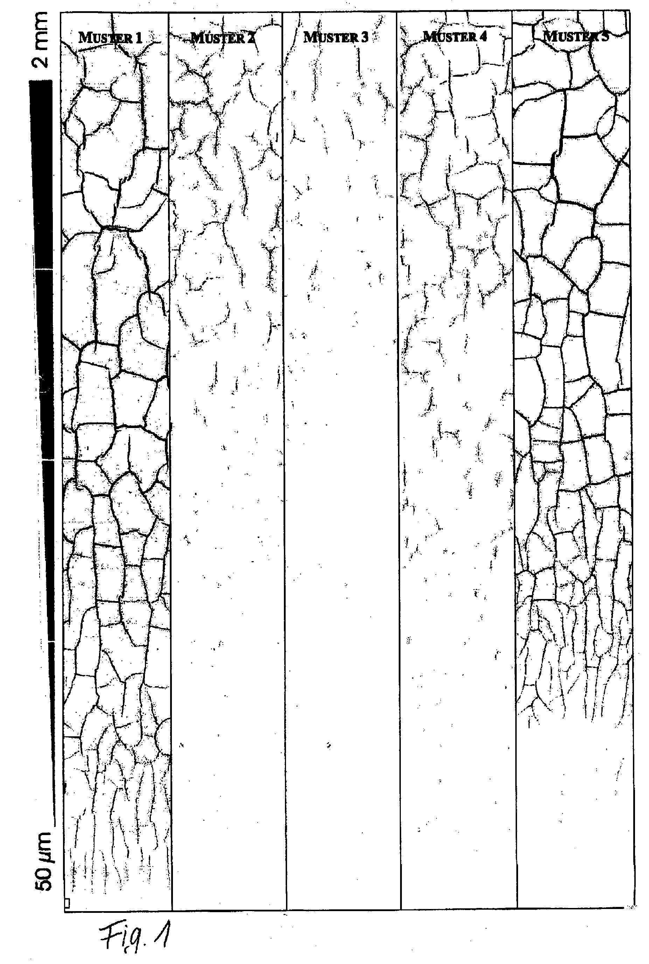

Diese Werte ermöglichen einen qualitativen und quantitativen Vergleich von verschiedenen Streichfarben. Nach Trocknung werden die Musterplatten eingescannt und in Fig. 1 graphisch dargestellt. Aus Fig. 1 Ist deutlich zu erkennen, dass die Farbe ohne Additiv zur Rissüberbrückung bereits bei einer Auftragsstärke von 50 µm Risse bildet Muster 5 mit einem herkömmlichen plättchenförmigen Kaolin bildet Risse in einem Bereich 50 - 500 µm und erweist sich damit als wenig akzeptabel.

Muster 2 wurde mit dem herkömmlichen Glimmer 325 hergestellt und zeigt Risse in dem Bereich 1-1,5 mm. Muster 3 wurde mit dem erfindungsgemäßen Kaolin V2 hergestellt und zeigt die beste Rissüberbrückung: es sind nur wenige Risse in dem Bereich 1,5 - 2 mm erkennbar. Das Muster 4 mit einer Kombination aus dem herkömmlichen Glimmer und dem erfindungsgemäßen Kaolin V2 zeigt gegenüber den Mustern 2 und 3 eine leichte Verschlechterung.

In der nachfolgenden Tabelle 10 wird die maximale Schichtstärke, bei der noch keine Risse auftreten, für die 5 Muster dargestellt:

**Tabelle 10**

| | Muster 1 | Muster 2 | Muster 3 | Muster 4 | Muster 5 |
|---|---|---|---|---|---|
| Schichtstärke (µm) | 50 | 1200 | 1750 | 900 | 350 |

Die Nullprobe, Muster 1 ohne rissüberbrückende Pigmente bzw. Additive, verfügt über keinen Widerstand gegen Rissbildung und zeigt Risse über die gesamte Fläche. Muster 5 mit herkömmlichen plättchenförmigen Kaolinen zeigt aufgrund der Plättchenförmigkeit bereits eine deutliche Verbesserung gegenüber der Nullprobe, aber ist immer noch nicht akzeptabel. Muster 2 mit dem herkömmlichen Glimmer zeigt Risse ab einer Schichtstärke von 1200 µm und entspricht damit den Anforderungen für Fassadenfarben. Die beste Rissüberbrückung zeigt aber das Muster 3 enthaltend das erfindungsgemäße Kaolin. Im Vergleich zum her kömmlichen Glimmer kann bei Einsatz dieses Materials das Risiko der Rissbildung erheblich reduziert werden.

Weiterhin werden die Proben nach Norm DIN EN ISO 4628 Teil 4 bewertet. Die Menge der Risse wird mit Werten zwischen 0 (keine erkennbaren Risse) und 5 (sehr viele Risse) angegeben. Beispiele zu diesen Werten sind in der DIN 4628 Teil 4 aufgenommen. Die Bewertung der Muster 1 bis 5 ist in Tabelle 11 aufgenommen:

**Tabelle 11:**

| | Muster 1 | Muster 2 | Muster 3 | Muster 4 | Muster 5 |
|---|---|---|---|---|---|
| 50 µm -1 mm | 4 | 1 | 0 | 1 | 3 |
| 1 mm - 1,5 mm | 5 | 2 | 0 | 2 | 5 |
| 1,5 mm - 2 mm | 5 | 4 | 2 | 4 | 5 |

Weiterhin führt die erfindungsgemäße Zusammensetzung aufgrund einer höheren Weiße zu besseren optischen Werten in der Farbe. Mit bloßem Auge ist bereits erkennbar, dass Muster 3 und 4 enthaltend erfindungsgemäßes Kaolin erheblich weißer sind als Muster 2 mit her kömmlichem Glimmer. Dies führt in der Farbe zu einem weiteren wichtigen Vorteil, da mit gleicher Rezeptur eine weißere Farbe hergestellt werden kann bzw. mit Behalt der Weiße teure Weißpigmente wie z.B. TiO₂ eingespart werden können.

Die optischen Werte der 5 Muster wurden mit einem Farbmessgerät vom Typ Elrepho 450 (Fa. Datacolor) gemessen und in der nachfolgenden Tabelle 12 eingetragen:

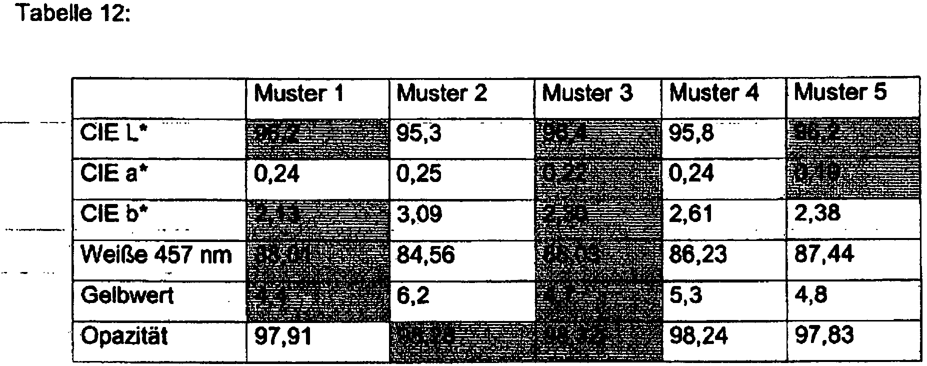

Bei allen optischen Parametern sind jeweils die beiden günstigsten Werte grau unterlegt. Der Tabelle ist zu entnehmen, dass Muster 3 die besten optischen Eigenschaften zeigt. Die ISO 2470-Weiße, gemessen bei 457 nm, beträgt 88,03 gegenüber 88,01 einer Probe ohne Additiv. Die Weiße wird also durch Verwendung des erfindungsgemäßen Kaolins nicht negativ beeinflusst.

Erwartungsgemäß zeigt auch das Muster 5, das mit einem herkömmlichen plättchenförmigen Kaolin hergestellt wurde, relativ gute optische Werte, jedoch bietet dieser herkömmliche plättchenförmige Kaolin keine ausreichende Rissüberbrückung.

Muster 2 hergestellt mit dem herkömmlichen Glimmer zeigt nur bei der Opazität einen guten Wert. Die Abdeckung ist bei diesem sehr plättchenförmigen Material sehr gut. Die anderen optischen Werten aber, vor allem Helligkeit L*, Weiße und Gelbwert zeigen deutlich schlechtere Werte. Dies führt in der Farbe zu einem erheblichen Nachteil, da die Weiße, eine der wichtigsten Eigenschaften einer Farbe, durch den Glimmer negativ beeinflusst wird, muss der Anteil an teuren Weißpigmenten, wie z.B. TiO₂, erhöht werden.

Bei Einsatz der erfindungsgemäßen Beschichtungszusammensetzung kann also, gegenüber herkömmlichen Rezepturen mit Glimmer, Weißpigment wie z.B. TiO₂ eingespart werden, was bei gleichen optischen Werten zu günstigeren Herstellkosten der Farbe führt. Alternativ kann, durch 1:1 Austausch des herkömmlichen Glimmers durch den erfindungsgemäßen Kaolin, eine Farbe mit einem höheren Weißgrad hergestellt werden. Der Preis bleibt auch in diesem Fall niedriger, da der Preis des erfindungsgemäßen Kaolins niedriger als der Preis des herkömmlichen Glimmers ist.

### Beispiel 4

Auf gleiche Art und Weise wie in Beispiel 2 beschrieben wird zur Analyse der Rissbeständigkeit ein weiterer erfindungsgemäßer Kaolin V3 hergestellt.

Die Korngrößenverteilung des Aufgabematerials wird in der nachfolgenden Tabelle 13 dargestellt:

**Tabelle 13:**

| | **Sedigraph** | **Cilas** |
|---|---|---|
| µm | **Ma-%** | **Ma-%** |
| >40 | 0 | 0 |
| 30-40 | 0 | 3 |
| 20-30 | 2 | 12 |
| 10-20 | 14 | 38 |
| 4-10 | 46 | 30 |
| 2-4 | 18 | 9 |
| 1-2 | 9 | 5 |
| < 1 | 11 | 3 |
| d₂₅ | 2,6 | 5,6 |
| d₅₀ | 5,2 | 10,6 |
| d₇₅ | 8,3 | 16,1 |

Die Kornverteilung des erfindungsgemäßen Endproduktes wird in der nachfolgenden Tabelle 14 dargestellt

**Tabelle 14:**

| | **Sedigraph** | **Cilas** |
|---|---|---|
| µm | **Ma-%** | **Ma-%** |
| >40 | 0 | 0 |
| 30-40 | 0 | 0 |
| 20-30 | 0 | 4 |
| 10-20 | 0 | 31 |
| 4-10 | 11 | 37 |
| 2-4 | 23 | 13 |
| 1-2 | 24 | 9 |
| <1 | 41 | 5 |
| d₂₅ | 0,6 | 3,6 |
| d₅₀ | 1,3 | 7,3 |
| d₇₅ | 2,6 | 12,3 |

Wie in Beispiel 3 beschrieben, werden mit diesem erfindungsgemäßen Material V3 Farben hergestellt. Die Rezepturen entsprechen denen aus Beispiel 3. Die Anteile an V3 werden in der nachstehenden Tabelle 15 zusammengefasst:

**Tabelle 15:**

| Funktion | Muster 6 | Muster 7 |
|---|---|---|
| Kaolin V3 (Erfindung) | 4 Ma-% | 8 Ma-% |

Nach Herstellung der Musterplatten wird erneut die maximale Schichtstärke gemessen, bei der keine Risse auftreten. Diese Werte sind in der nachfolgenden Tabelle 16 zusammengefasst:

**Tabelle 16:**

| | Muster 6 | Muster 7 |
|---|---|---|
| Schichtstärke [µm] | 850 | 1100 |

Muster 6 ist demnach vergleichbar mit Muster 5 aus Beispiel 3. Muster 7, enthaltend die doppelte Menge an V3, zeigt eine verbesserte Rissüberbrückungswirkung.

Die erfindungsgemäße Beschichtungszusammensetzung kann aus Aufgabekaolin mit einem d₅₀-Wert, gemessen mit dem Sedigraphen, von 2 bis 40 µm hergestellt werden. Vorzugsweise beträgt der d₅₀-Wert. gemessen mit dem Sedigraphen, des Ausgangsmaterials mindestens 10 µm. Gemessen mittels Laserbeugung weist das Aufgabematerial einen mittleren Korndurchmesser von mindestens 7,5 µm, vorzugsweise mehr als 20 µm auf.

Das Material wird gemäß der vorliegenden Erfindung in Wasser dispergiert und anschlie-βend in einer Kugelmühle, vorzugsweise in einer Nasskugelmühle, unter definierten Bedingungen vermahlen. Danach wird der resultierende Slurry entwässert und getrocknet. Die Filterplatten werden pulverisiert.

Das resultierende Material weist einen d₅₀-Wert, gemessen mit dem Sedigraphen, von mindestens 1 µm, bevorzugt mindestens 2 µm, eher bevorzugt mindestens 3 µm auf. Gemessen mit Laserbeugung liegt der d₅₀-Wert bei mindestens 10 µm, bevorzugt mindestens 15µm.

Die Weiße R 457 des Materials beträgt mindestens 75, vorzugsweise mindestens 80. Die spezifische Oberfläche (BET) des Materials beträgt mindestens 7,5 m²/g.

Das erfindungsgemäße Kaolin kann in Farben eingesetzt werden und führt zu einer besseren Rissüberbrückung im Vergleich zu herkömmlichen Glimmer. In Farbrezepturen kann das Kaolin in einer Konzentration von 15% und weniger eingesetzt werden. Für ein gutes Preis/Leistungsverhältnis sind Konzentrationen unter 10% möglich. Vorzugsweise werden 2 bis 8% eingesetzt, noch vorteilhafter 2 bis 6%. Im Vergleich zum herkömmlichen Glimmer wird bei einem 1:1 Austausch des erfindungsgemäßen Kaolins gegen Glimmer eine Farbe mit verbesserten optischen Eigenschaften hergestellt.

In Wandbeschichtungen, z.B. Putz, führt der erfindungsgemäße Kaolin zu ähnlichen Effekten.

Sämtliche in den Anmeldungsunterlagen offenbarten Merkmale werden als erfindungsweseitlich beansprucht, sofern sie einzeln oder in Kombination gegenüber dem Stand der Technik neu sind.

## Patentansprüche

1. Verfahren zur Herstellung einer Beschichtungszusammensetzung enthaltend Kaolin,
**dadurch gekennzeichnet, dass**
in einem ersten Schritt ein Kaolin mit einem mittleren Partikeldurchmesser von mindestens 2 µm gemessen mittels einem Sedigraph und einer mittleren Korngröße von mindestens 7,5 µm gemessen mittels Laserbeugung, in Wasser dispergiert wird und in einem zweiten Schritt in einer Kugelmühle vermahlen wird, bis das Kaolin in Form grobflächiger, dünner, plättchenartiger Partikel mit einem mittleren Durchmesser von 1 - 40 µm, gemessen mittels einem Sedigraph und einer mittleren Komgröße von mindestens 5 µm gemessen mittels Laserbeugung, einer mittleren spezifischen Oberfläche von 7,5 - 20 m²/g, gemessen nach BET, einem Welßgrad R457 von mindestens 75 und einer Ölaufnahme kleiner 28 g/100g vorliegt und dieses anschließend
- gepresst,
- getrocknet,
- pulverisiert und
einer Beschichtungszusammensetzung zugesetzt wird.

2. Verfahren zur Herstellung einer Beschichtungszusammensetzung enthaltend Kaolin gemäß Anspruch 1,
**dadurch gekennzeichnet, dass**
in dem ersten Schritt ein Kaolin mit einem mittleren Partikeldurchmesser von mindestens 10 µm, gemessen mittels einem Sedigraph,verwendet wird.

3. Verfahren zur Herstellung einer Beschichtungszusammensetzung enthaltend Kaolin gemäß Anspruch 1 oder 2,
**dadurch gekennzeichnet, dass**
das Kaolin vermahlen wird., bis das Kaolin in Form grobflächiger, dünner, plättchenartiger Partikel mit einem mittleren Partikeldurchmesser von mindestens 1,5 µm, bevorzugt mindestens 2 µm, bevorzugt mindestens 2,5 µm, besonders bevorzugt mindestens 3 µm gemessen mittels einem Sedigraph und einer mittleren Korngröße von mindestens 7 µm. bevorzugt mindestens 10 µm, bevorzugt mindestens 12,5 µm, bevorzugt mindestens 14 µm, besonders bevorzugt mindestens 15 µm, gemessen mittels Laserbeugung vorliegt

4. Verfahren zur Herstellung einer Beschichtungszusammensetzung enthaltend Kaolin nach einem der vorangegangenen Ansprüche,
**dadurch gekennzeichnet, dass**
das Kaolin bis zu einem mittleren Partikeldurchmesservon 1 - 20 µm, bevorzugt von 1 - 10 µm, besonders bevorzugt von 1,5 - 3 µm, gemessen mittels einem Sedigraph, vermahlen wird.

5. Verfahren zur Herstellung einer Beschichtungszusammensetzungenthaltend Kaolin nach einem der vorangegangenen Ansprüche,
**dadurch gekennzeichnet, dass**
das Kaolinbis zu einer mittleren spezifischen Oberfläche von 10 - 15 m²/g, gemessen nach BET,vermahlen wird.

6. Beschichtungszusammensetzungenthaltend Kaolin, wobei das Kaolin, welches in einer Kugelmühle vermahlen ist und in Form grobflächiger, dünner, plättchenartiger Partikel mit einer mittleren spezifischen Oberfläche von 7,5 - 20 m²/g, gemessen nach BET, vorliegt.
**dadurch gekennzeichnet, dass**
das Kaolin einem mittleren Durchmesser von 1 - 40 µm, gemessen mittels einem Sedlgraph und einer mittleren Komgröße von mindestens 5 µm gemessen mittels Laserbeugung und eine einen Weißgrad R457 von mindestens 75 und eine Ölaufnahme kleiner 28 g/100g aufweistund gepresst, getrocknet und pulverisiert ist

7. Beschichtungszusammensetzung nach Anspruch 6,
**dadurch gekennzeichnet, dass**
das Kaolin einemmittleren Durchmesser von mindestens 1,5 µm, bevorzugt mindestens 2 µm, bevorzugt mindestens 2,5 µm, besonders bevorzugt mindestens 3 µm gemessen mittels einem Sedigraph und einer mittleren Korngröße von mindestens 7 µm, bevorzugt mindestens 10 µm, bevorzugt mindestens 12,5 µm, bevorzugt mindestens 14 µm, besonders bevorzugt mindestens 15 µm, gemessen mittels Laserbeugung vorliegt

8. Beschichtungszusammensetzung nach Anspruch 6 oder 7,
**dadurch gekennzeichnet, dass**
das Kaolinmit einem mittleren Partikeidurchmesser von 1 - 20 pm, gemessen mittels einem Sedigraph, vorliegt.

9. Beschichtungszusammensetzung nach einem der Ansprüche 6 - 8,
**dadurch gekennzeichnet, dass**
das Kaolin mit einem mittleren Partikeldurchmesser von 1 - 10 µm. Insbesondere 1,5 - 3 µm, gemessen mittels einem Sedigraph, vorliegt.

10. Beschichtungszusammensetzung nach einem der Ansprüche 6 - 9,
**dadurch gekennzeichnet, dass**
das Kaolin mit einer mittleren spezifischen Oberfläche von 10 -15 m²/g, gemessen nach BET, vorliegt.

11. Beschichtungszusammensetzung nach einem der Ansprüche 6 - 10,
**dadurch gekennzeichnet, dass**
das Kaolin einen Weißgrad R457 von mindestens 80, insbesondere von mindestens 85, aufweist.

12. Beschichtungszusammensetzung nach einem der Ansprüche 6-11,
**dadurch gekennzeichnet, dass**
das Kaolin einen Gelbwert von maximal 7, insbesondere von maximal 4, aufweist.

13. Beschichtungszusammensetzung nach einem der Ansprüche -6 - 12,
**dadurch gekennzeichnet, dass**
das Kaolin eine Ölaufnahme kleiner 26 g/100g, aufweist.

14. Verwendung einer Beschichtungszusammensetzung nach einem der Ansprüche 6 - 12 als Füllstoff und/oder Pigment in Farbe, Lack, Papier und/oder Kunststoff.

15. Verwendung einer Beschichtungszusammensetzung nach Anspruch 14 zur Beschichtung von Oberflächen.
**dadurch gekennzeichnet, dass**
das Kaolin der Beschichtungszusammensetzung in einer Farbe zu einem Anteil von weniger als 15 Ma.-% vorliegt.

## Claims

1. A method of manufacturing a coating composition containing kaolin, **characterized in that** in a first step a kaolin with an average particle diameter of at least 2 µm measured by means of a SediGraph and an average grain size of at least 7.5 µm measured by means of laser diffraction is dispersed in water, and in a second step is ground in a ball mill until the kaolin is present in the form of rough, thin, plate-like particles with an average diameter of from 1 to 40 µm measured by means of a SediGraph and an average grain size of at least 5 µm measured by means of laser diffraction, an average specific surface of from 7.5 to 20 m²/g measured in accordance with BET, a degree of whiteness R457 of at least 75 and an oil absorption of less than 28 g/100g, and this is then
- pressed,
- dried,
- pulverized and
added to a coating composition.

2. A method of manufacturing a coating composition containing kaolin according to claim 1, **characterized in that** in the first step a kaolin with an average particle diameter of at least 10 µm measured by means of a SediGraph is used.

3. A method of manufacturing a coating composition containing kaolin according to claim 1 or 2, **characterized in that** the kaolin is ground until the kaolin is present in the form of rough, thin, plate-like particles with an average particle diameter of at least 1.5 µm, preferably at least 2 µm, preferably at least 2.5 µm, in a particularly preferred manner at least 3 µm, measured by means of a SediGraph and an average grain size of at least 7 µm, preferably at least 10 µm, preferably at least 12.5 µm, preferably at least 14 µm, in a particularly preferred manner at least 15 µm, measured by means of laser diffraction.

4. A method of manufacturing a coating composition containing kaolin according to any one of the preceding claims, **characterized in that** the kaolin is ground to an average particle diameter of from 1 to 20 µm, preferably from 1 to 10 µm, in a particularly preferred manner from 1.5 to 3 µm, measured by means of a SediGraph.

5. A method of manufacturing a coating composition containing kaolin according to any one of the preceding claims, **characterized in that** the kaolin is ground to an average specific surface of from 10 to 15 m²/g, measured in accordance with BET.

6. A coating composition containing kaolin, wherein the kaolin which is ground in a ball mill and is present in the form of rough, thin, plate-like particles with an average specific surface of from 7.5 to 20 m²/g measured in accordance with BET, **characterized in that** the kaolin has an average diameter of from 1 to 40 µm measured by means of a SediGraph and an average grain size of at least 5 µm measured by means of laser diffraction and a degree of whiteness R457 of at least 75 and an oil absorption of less than 28 g/100g and is pressed, dried and pulverized.

7. A coating composition according to claim 6, **characterized in that** the kaolin is present with an average diameter of at least 1.5 µm, preferably at least 2 µm, preferably at least 2.5 µm, in a particularly preferred manner at least 3 µm, measured by means of a SediGraph and an average grain size of at least 7 µm, preferably at least 10 µm, preferably at least 12.5 µm, preferably at least 14 µm, in a particularly preferred manner at least 15 µm, measured by means of laser diffraction.

8. A coating composition according to claim 6 or 7, **characterized in that** the kaolin is present with an average particle diameter of from 1 to 20 µm measured by means of a SediGraph.

9. A coating composition according to any one of claims 6 to 8, **characterized in that** the kaolin is present with an average particle diameter of from 1 to 10 µm, in particular from 1.5 to 3 µm, measured by means of a SediGraph.

10. A coating composition according to any one of claims 6 to 9, **characterized in that** the kaolin is present with an average specific surface of from 10 to 15 m²/g, measured in accordance with BET.

11. A coating composition according to any one of claims 6 to 10, **characterized in that** the kaolin has a degree of whiteness R457 of at least 80, in particular of at least 85.

12. A coating composition according to any one of claims 6 to 11, **characterized in that** the kaolin has a yellow value of a maximum of 7, in particular a maximum of 4.

13. A coating composition according to any one of claims 6 to 12, **characterized in that** the kaolin has an oil absorption of less than 26 g/100g.

14. Use of a coating composition according to any one of claims 6 to 12 as a filler and/or a pigment in paint, lacquer, paper and/or plastics material.

15. Use of a coating composition according to claim 14 for the coating of surfaces, **characterized in that** the kaolin of the coating composition is present in a paint in a proportion of less than 15 % by mass.

## Revendications

1. Procédé de fabrication d'une composition de revêtement contenant du kaolin, **caractérisé en ce que**, lors d'une première étape, un kaolin présentant un diamètre moyen des particules d'au moins 2 µm, mesuré au moyen d'un sédigraphe, et une granulométrie moyenne d'au moins 7,5 µm, mesurée par diffraction laser, est dispersé dans de l'eau et, lors d'une deuxième étape, il est broyé dans un broyeur à billes jusqu'à ce que le kaolin se présente sous forme de particules lamellaires minces à surface grossière, présentant un diamètre moyen de 1 à 40 µm, mesuré au moyen d'un sédigraphe, et une granulométrie moyenne d'au moins 5 µm, mesurée par diffraction laser, une surface spécifique moyenne de 7,5 à 20 m²/g, mesurée suivant la méthode BET, un degré de blancheur R457 d'au moins 75 et une absorption d'huile inférieure à 28 g/100 g, puis celui-ci est
- pressé,
- séché,
- pulvérisé, et
ajouté à une composition de revêtement.

2. Procédé de fabrication d'une composition de revêtement contenant du kaolin selon la revendication 1, **caractérisé en ce que**, lors de la première étape, un kaolin est utilisé avec un diamètre moyen des particules d'au moins 10 µm, mesuré au moyen d'un sédigraphe.

3. Procédé de fabrication d'une composition de revêtement contenant du kaolin selon la revendication 1 ou 2, **caractérisé en ce que** le kaolin est broyé jusqu'à ce que le kaolin se présente sous forme de particules lamellaires minces à surface grossière, présentant un diamètre moyen des particules d'au moins 1,5 µm, de préférence d'au moins 2 µm, de préférence d'au moins 2,5 µm, de manière particulièrement préférée d'au moins 3 µm, mesuré au moyen d'un sédigraphe, et une granulométrie moyenne d'au moins 7 µm, de préférence d'au moins 10 µm, de préférence d'au moins 12,5 µm, de préférence d'au moins 14 µm, de manière particulièrement préférée d'au moins 15 µm, mesurée par diffraction laser.

4. Procédé de fabrication d'une composition de revêtement contenant du kaolin selon l'une quelconque des revendications précédentes, **caractérisé en ce que** le kaolin est broyé jusqu'à l'obtention d'un diamètre moyen des particules de 1 à 20 µm, de préférence de 1 à 10 µm, de manière particulièrement préférée de 1,5 à 3 µm, mesuré au moyen d'un sédigraphe.

5. Procédé de fabrication d'une composition de revêtement contenant du kaolin selon l'une quelconque des revendications précédentes, **caractérisé en ce que** le kaolin est broyé jusqu'à l'obtention d'une surface spécifique moyenne de 10 à 15 m²/g, mesurée suivant la méthode BET.

6. Composition de revêtement contenant du kaolin, le kaolin ayant été broyé dans un broyeur à billes et se présentant sous forme de particules lamellaires minces à surface grossière, présentant une surface spécifique moyenne de 7,5 à 20 m²/g, mesurée par la méthode BET, **caractérisée en ce que** le kaolin présente un diamètre moyen de 1 à 40 µm, mesuré au moyen d'un sédigraphe, et une granulométrie moyenne d'au moins 5 µm, mesurée par diffraction laser, et un degré de blancheur R457 d'au moins 75 et une absorption d'huile inférieure à 28 g/100 g, et a été pressé, séché et pulvérisé.

7. Composition de revêtement selon la revendication 6, **caractérisée en ce que** le kaolin est présent avec un diamètre moyen d'au moins 1,5 µm, de préférence d'au moins 2 µm, de préférence d'au moins 2,5 µm, de manière particulièrement préférée d'au moins 3 µm, mesuré au moyen d'un sédigraphe, et une granulométrie moyenne d'au moins 7 µm, de préférence d'au moins 10 µm, de préférence d'au moins 12,5 µm, de préférence d'au moins 14 µm, de manière particulièrement préférée d'au moins 15 µm, mesurée par diffraction laser.

8. Composition de revêtement selon la revendication 6 ou 7, **caractérisée en ce que** le kaolin est présent avec un diamètre moyen des particules de 1 à 20 µm, mesuré au moyen d'un sédigraphe.

9. Composition de revêtement selon l'une quelconque des revendications 6 à 8, **caractérisée en ce que** le kaolin est présent avec un diamètre moyen des particules de 1 à 10 µm, en particulier de 1,5 à 3 µm, mesuré au moyen d'un sédigraphe.

10. Composition de revêtement selon l'une quelconque des revendications 6 à 9, **caractérisée en ce que** le kaolin est présent avec une aire spécifique moyenne de 10 à 15 m²/g, mesurée par la méthode BET.

11. Composition de revêtement selon l'une quelconque des revendications 6 à 10, **caractérisée en ce que** le kaolin présente un degré de blancheur R457 d'au moins 80, en particulier d'au moins 85.

12. Composition de revêtement selon l'une quelconque des revendications 6 à 11, **caractérisée en ce que** le kaolin présente un degré de jaune au maximum de 7, en particulier au maximum de 4.

13. Composition de revêtement selon l'une quelconque des revendications 6 à 12, **caractérisée en ce que** le kaolin présente une absorption d'huile inférieure à 26 g/100 g.

14. Utilisation d'une composition de revêtement selon l'une quelconque des revendications 6 à 12 en tant que matière de charge et/ou pigment dans une peinture, un vernis, du papier et/ou d'une matière plastique.

15. Utilisation d'une composition de revêtement selon la revendication 14 pour revêtir des surfaces, **caractérisée en ce que** le kaolin de la composition de revêtement est présent dans une peinture selon une proportion inférieure à 15 % en masse.
